# EUROPEAN PATENT APPLICATION

(11) **EP 4 848 475 A1**
(43) Date of publication of application: **02.12.2026**
(21) Application number: 25762337.1
(22) Date of filing: 20.02.2025
(51) Int. Cl.: H01Q 1/12, H01Q 5/28, H01Q 21/06, H01Q 21/24, H01Q 13/10, H01Q 21/28, H01Q 1/48, H04B 7/0413

(54) **ANTENNA STRUCTURE AND ELECTRONIC DEVICE INCLUDING SAME**

(30) Priority: 29.02.2024 KR 20240030324; 07.05.2024 KR 20240060009
(71) Applicant: Samsung Electronics Co., Ltd., Suwon-si, Gyeonggi-do 16677 (KR)
(72) Inventor: KIM, Youngsub, Suwon-si Gyeonggi-do 16677 (KR); LEE, Jongmin, Suwon-si Gyeonggi-do 16677 (KR); PARK, Jungmin, Suwon-si Gyeonggi-do 16677 (KR); YOON, Inseop, Suwon-si Gyeonggi-do 16677 (KR); HA, Dohyuk, Suwon-si Gyeonggi-do 16677 (KR)
(74) Representative: Gulde & Partner
(86) International application number: PCT/KR2025/002414
(87) International publication number: WO 2025/183403

(57) **Abstract**

An antenna module according to an embodiment of the present disclosure may include: an antenna substrate; a signal line disposed on the antenna substrate; a first ground line disposed on the antenna substrate to be adjacent to at least a portion of the signal line and having one end grounded; a second ground line disposed on the antenna substrate to be adjacent to at least a portion of the signal line and having one end grounded; an array antenna including a plurality of antenna elements disposed on the antenna substrate; and an RFIC configured to control a signal applied to the plurality of antenna elements, wherein the antenna elements include: a first support part connected to the first ground line; a second support part connected to the second ground line; and an emission body connected to upper ends of the first support part and the second support part.

## Description

### Technical Field

The disclosure relates to antennas, and more specifically, to the feeding structure of a dipole antenna.

### Background Art

As a massive multiple input multiple output (MIMO) unit (MMU) antenna, a metal patch antenna may be configured with a divider disposed on a PCB and a metal patch. Since the structure is simple and the connection structure with the main board is also relatively simple, product manufacturing is easy, and assembly tolerances may be reduced due to simplified structure, components, and manufacturing processes. The divider (e.g., T-junction divider) is designed to create a 180-degree phase difference at a specified frequency, but it cannot create a 180-degree phase difference when a signal of a different frequency is used. The metal patch antenna may be used as a narrowband antenna.

A dipole antenna, as an MMU antenna, may include a radiator and a balun that applies a balanced signal to the radiator and supports the radiator. The dipole antenna may be constructed by connecting a balun to the substrate and connecting a radiator to the top of the balun. Balanced-to-unbalanced (baluns) may generate a constant 180-degree phase difference across all frequencies, and dipole antennas support a wide bandwidth while offering excellent radiation characteristics, linearity, and isolation performance.

In general, the balun in a dipole antenna is formed on the support structure. The balun is constructed by printing a pattern to output a balanced signal onto a piece of PCB that supports the radiator. In this case, additional components and manufacturing processes are required to connect the substrate, the balun, and the radiator.

Recently, a manufacturing method has been devised in which the structure of a substrate, a support structure, and a radiator is injection-molded using plastic materials and molds, followed by patterning of the balun. Although this plastic dipole antenna eliminates the need to worry about connections between components, it requires plastic mold technology for manufacturing, and since the minimum spacing between lines of the printable pattern on the plastic exceeds twice the minimum spacing possible on a standard PCB board, design freedom is limited. Furthermore, plastic products suffer from significant energy loss and pose a risk of permanent deformation of the product's exterior due to heat generation.

Additionally, the balun must be 20mm long to operate (at 3.5G in air); however, to achieve this length, the support structure of the antenna must be lengthened, which consequently limits the design of the antenna's height. Under these criteria, if the antenna height exceeds 10mm, antenna performance, such as gain, beamwidth, bandwidth, CPR, etc., deteriorates.

### Disclosure of Invention

### Technical Problem

Based on the discussion above, the disclosure provides a balun structure for feeding a dipole antenna, a dipole antenna, and an electronic device including the same.

Additionally, the disclosure provides a dipole antenna, a connection structure between a radiator and a balun for the same, and an electronic device including the same.

### Solution to Problem

An antenna module according to an embodiment of the disclosure may include: an antenna substrate; a signal line disposed on the antenna substrate; a first ground line disposed on the antenna substrate to be adjacent to at least a part of the signal line and having one end grounded; a second ground line disposed on the antenna substrate to be adjacent to at least a part of the signal line and having one end grounded; an array antenna including a plurality of antenna elements disposed on the antenna substrate; and a radio frequency integrated circuit (RFIC) configured to control a signal applied to the plurality of antenna elements, wherein the antenna element may include: a first support part connected to the first ground line and a second support part connected to the second ground line; and a radiator connected to upper ends of the first support part and the second support part.

A base station according to an embodiment of the disclosure may include: an antenna unit including an antenna module; and a controller, wherein the antenna module may include: an antenna substrate; a signal line disposed on the antenna substrate; a first ground line disposed on the antenna substrate to be adjacent to at least a part of the signal line and having one end grounded; a second ground line disposed on the antenna substrate to be adjacent to at least a part of the signal line and having one end grounded; an array antenna including a plurality of antenna elements disposed on the antenna substrate; and a radio frequency integrated circuit (RFIC) configured to control a signal applied to the plurality of antenna elements, and wherein the antenna element may include: a first support part connected to the first ground line and a second support part connected to the second ground line; and a radiator connected to upper ends of the first support part and the second support part.

An antenna module according to an embodiment of the disclosure may include: an antenna substrate; a signal line disposed on the antenna substrate; a balun disposed on the antenna substrate to be adjacent to at least a part of the signal line; an array antenna including a plurality of antenna elements disposed on the antenna substrate; and a radio frequency integrated circuit (RFIC) configured to control a signal applied to the plurality of antenna elements, wherein the antenna element may include: a first support part and a second support part connected to the balun; and a radiator connected to upper ends of the first support part and the second support part.

### Advantageous Effects of Invention

According to an embodiment of the disclosure, a balanced signal may be fed to a dipole antenna through a balun structure that is horizontally disposed on an antenna substrate, so the antenna height may be designed regardless of the length of the balun.

According to an embodiment of the disclosure, since a part of the radiator is bent to form a support part, the connection structure between the radiator and the support part is simple.

According to an embodiment of the disclosure, since the balun is horizontally disposed on a substrate and the lower end of the support part is connected thereto, the components of the substrate, balun, and radiator may be easily connected using surface mount technology (SMT).

### Brief Description of Drawings

FIG. 1 illustrates a balanced-to-unbalanced converter (balun) according to an embodiment of the disclosure.
FIG. 2 illustrates a signal line and a balun disposed on an antenna substrate according to an embodiment of the disclosure.
FIG. 3 illustrates a radiator of a dipole antenna according to an embodiment of the disclosure.
FIG. 4 illustrates a dipole antenna patch included in an antenna device according to an embodiment of the disclosure.
FIG. 5 illustrates a polarization component that may be created using a dipole antenna according to an embodiment of the disclosure.
FIG. 6 illustrates a signal line and a balun disposed on an antenna substrate according to an embodiment of the disclosure.
FIG. 7 illustrates a polarization component that may be created using a dipole antenna according to an embodiment of the disclosure.
FIG. 8 illustrates an antenna element according to an embodiment of the disclosure.
FIG. 9 illustrates the size of an antenna according to an embodiment of the disclosure.
FIG. 10 illustrates an electrical path formed on the surface of a radiator when a signal is applied to the radiator according to an embodiment of the disclosure.
FIG. 11 illustrates a balun according to an embodiment of the disclosure.
FIG. 12 illustrates a resistor, a bridge, or a slot for electrically connecting two conductors of a balun according to an embodiment of the disclosure.
FIG. 13 illustrates a balun according to an embodiment of the disclosure.
FIG. 14 illustrates a balun according to an embodiment of the disclosure.
FIG. 15 illustrates a balun according to an embodiment of the disclosure.
FIG. 16 illustrates an example of antenna performance according to an antenna structure according to an embodiment of the disclosure.
FIG. 17 illustrates an antenna according to an embodiment of the disclosure.
FIG. 18 illustrates an example of performance of a sub-array according to an embodiment of the disclosure.
FIG. 19 illustrates the average gain performance of a sub-array according to an embodiment of the disclosure.
FIG. 20 illustrates an example of average half-power beam width (HPBW) performance of a sub-array according to an embodiment of the disclosure.
FIG. 21 illustrates an example of average CPR performance of a sub-array according to an embodiment of the disclosure.
FIG. 22 illustrates an antenna module according to an embodiment of the disclosure.
FIG. 23 illustrates the functional configuration of an electronic device according to an embodiment of the disclosure.

### Mode for the Invention

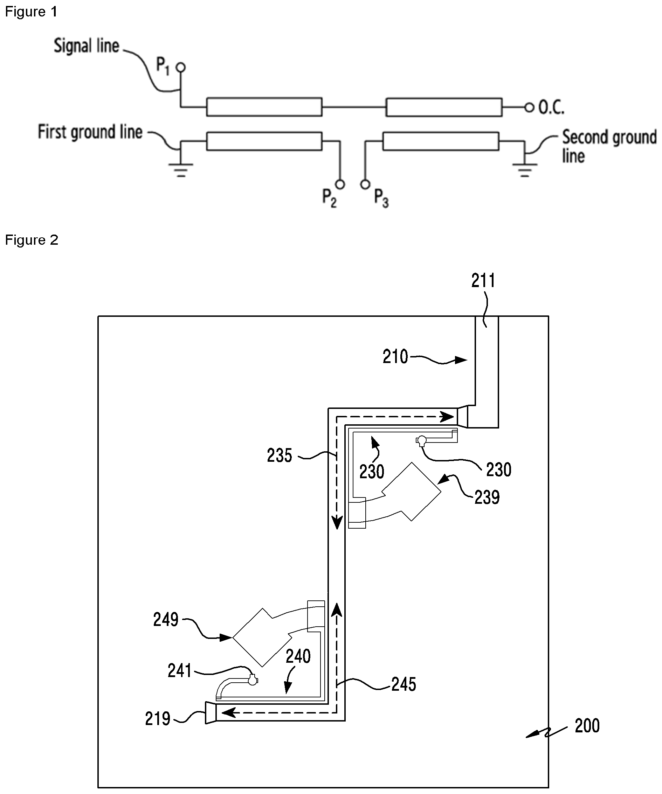

FIG. 1 illustrates a balanced-to-unbalanced converter (balun) according to an embodiment of the disclosure.

An antenna module of the disclosure may include a balun that feeds two types of signals of equal magnitude and opposite phase to a radiator in order to operate as a dipole antenna.

Referring to FIG. 1, the two ends of a signal line may be referred to as port 1 (P1) and an open terminal (O.C.), respectively, and the balun may be disposed adjacent to at least a part of the signal line. The balun may include two ground lines corresponding to the signal line. The first ground line may be disposed adjacent to and parallel to the signal line along at least a part of the signal line, and the end of the first ground line may be grounded. The second ground line may also be disposed adjacent to and parallel to the signal line along at least a part of the signal line, and the end of the second ground line may also be grounded.

In the disclosure, the length of the first ground line and the length of the second ground line may be the same so that the balun supplies two types of signals of opposite phase and equal magnitude to the radiator. The balun may refer to a Marchand balun that maintains a constant phase difference between the two types of signals transmitted to the radiator.

A single balun may include two ground lines, and the ground line is a conductive line with one end grounded, and the other end of the ground line may be connected to the radiator. When current flows through a signal line disposed adjacent to the ground line of the balun, at least a portion of the electrical energy of the current flowing along the signal line may be transferred to the ground line of the balun due to the coupling effect caused by interference between the two adjacent conductive lines. In this manner, when electrical energy is transferred from the signal line to the ground line disposed adjacent to the signal line, it may be said that the ground line and the signal line are electrically coupled.

When the balun is coupled with at least a part of the signal line, an RF signal may be generated in the balun due to the electrical energy transferred from the signal line to the balun, and the balun may transmit the RF signal to an antenna radiator connected to the balun. In other words, when the signal line and the ground line of the balun are coupled, the ground line of the balun may feed the RF signal to the radiator.

Since an antenna element or antenna radiator according to an embodiment is connected to a part of the ground line of the balun, when an RF signal is generated due to coupling at the ground line of the balun, it may receive the RF signal from the balun and radiate it into the air.

Strong coupling between the signal line and the ground line means that the energy transferred from the signal line to the ground line is large, and the greater the energy transferred, the more effectively impedance matching may be performed.

The distance between the signal line and the ground line affects the magnitude of the RF signal generated at the ground line. Generally, the smaller the distance between the signal line and the ground line, the stronger the interference between the signal line and the ground line; thus, the coupling is strong, and a stronger RF signal may be generated. In the disclosure, the distance between the signal line and the ground line may be configured to 0.15 mm, which is the minimum distance between lines provided in the PCB process. According to an embodiment, since two ground lines (e.g., a first ground line and a second ground line) included in a single balun must be able to feed signals of opposite phase and equal magnitude, the distance between the first ground line and the signal line and the distance between the second ground line and the signal line may be equal.

The degree of coupling between the signal line and the ground line may vary depending on the presence or absence of a ground plane, the thickness of the substrate, and the permittivity. For example, if a slot is formed on the ground plane below the signal line and the ground line (i.e., if a part of the ground is removed), strong coupling may occur between the signal line and the ground line. For example, the thicker the dielectric, the stronger the coupling, and the thinner the dielectric, the weaker the coupling. For example, the lower the permittivity, the stronger the coupling, and the higher the permittivity, the weaker the coupling.

Since the ground line couples with the signal line, it may also be referred to as a coupling line. When a signal is applied to the signal line through P1, the first ground line and the second ground line, disposed adjacent to the signal line, may be coupled with the signal line. At this time, the signal applied to the signal line may be an unbalanced signal. The degree of coupling between the signal line and the ground line may be determined based on the length of the ground line coupled with the signal line, the distance between the signal line and the ground line, the presence or absence of a ground plane, the thickness of the substrate, and the permittivity. Whether the balun is impedance-matched may be determined based on the distance between the signal line and the ground line.

The end of the first ground line, other than the grounded terminal, may be referred to as port 2 (P2), and the first ground line coupled with the signal line may output a first balanced signal through port 2. The end of the second ground line, other than the grounded terminal, may be referred to as port 3, and the second ground line coupled with the signal line may output a second balanced signal through port 3.

If the degree of coupling between the signal line and the first ground line is the same as the degree of coupling between the signal line and the second ground line, half of the electrical energy applied to the signal line may be transferred to the first ground line, and the other half may be transferred to the second ground line. Balanced signals of equal magnitude and opposite phase may be obtained from port 2 and port 3. A phase difference of 180 degrees may be determined by designing the length of the first ground line and the length of the second ground line to be equal.

Referring to FIG. 1, the length of each ground line may be approximately λg/4 with respect to the tube wavelength (λg). For example, the length of each ground line (i.e., the length of the balun) may be required to be 20 mm in air at 3.5 GHz. Although using a dielectric material may shorten the required design length of the balun depending on the permittivity, it may result in greater energy loss.

When designing general antennas, a balun may be used to feed two types of signals having a phase difference of 180 degrees to a dipole antenna. In general, the balun may be formed on a member supporting the radiator of the dipole antenna by methods such as printing. Since the length of the balun printed on the support member must satisfy the required design length based on the permittivity, the height of the antenna may be increased. A height of 10 mm is appropriate for the antenna at 3.5 GHz, and as the antenna height increases beyond a threshold, antenna characteristics related to gain, bandwidth, CPR, and isolation may deteriorate.

FIG. 2 illustrates a signal line and a balun disposed on an antenna substrate according to an embodiment of the disclosure.

The ground lines constituting the balun according to an embodiment may be disposed together with the signal line on the antenna substrate (e.g., a PCB). Referring to FIG. 2, a signal line 210 may be disposed on an antenna substrate 200, and the signal line 210 may include a port 1 (211) and an open terminal 219. A first ground line 230 and a second ground line 240 may be disposed adjacent to at least a part of the signal line 210. One end 231 of the first ground line may be grounded and the other end may be connected to a first antenna pad 239. One end 241 of the second ground line may be grounded and the other end may be connected to a second antenna pad 249.

The length 235 of the first ground line may be the same as the length 245 of the second ground line. In this case, the magnitude of the signal output by the first ground line coupled with the signal line may be the same as the magnitude of the signal output by the second ground line coupled with the signal line.

The length 235, 245 of each ground line may be configured to λ_{g}/4. For example, the length of the ground line may be 20 mm (at 3.5 GHz in air).

In an embodiment, in order to configure the lengths 235, 245 of the ground lines to λ_{g}/4 while simultaneously miniaturizing the antenna module, the ground lines 230, 240 may be designed in a bent shape as shown in FIG. 2. In another embodiment, unlike FIG. 2, the ground line may be designed as a straight line.

When a signal is applied to the signal line, the ground line coupled with the signal line may output a signal corresponding to the applied signal. According to an embodiment, an unbalanced signal may be applied to the signal line, and a balanced signal may be output from the ground line coupled with the signal line. For example, when an unbalanced signal is applied to the signal line 210 through port 1 (211), the first ground line 230 coupled with the signal line may output a balanced signal, and the second ground line 240 coupled with the signal line may also output a balanced signal. According to an embodiment, since the length of the first ground line and the length of the second ground line are the same, the first balanced signal and the second balanced signal may have opposite phase (or there may be a phase difference of 180 degrees). Furthermore, since the degree to which each ground line is coupled with the signal line is the same when the length of the first ground line and the length of the second ground line are the same, the magnitudes of the first balanced signal and the second balanced signal may also be the same.

According to an embodiment, an antenna element may be connected to a part of the ground line of the balun. Specifically, a support part included in the antenna element may be connected to one end (e.g., an output port of the balun) of the ground line of the balun, and thus, a signal output by the ground line of the balun, which is coupled with a signal line, may be transmitted to the support part. For example, the first ground line may transmit the signal to the support part through port 2 (e.g., P2 in FIG. 1). Since the signal transmitted to the support part of the antenna element is transmitted to the radiator of the antenna element, the antenna element may radiate the signal received from the balun into the air. The antenna element may include a radiator that radiates a signal into the air and a support part that supports the radiator on a substrate.

In this case, one end (e.g., the output port of the balun) of the ground line of the balun may function as a receptor for a surface mount technology (SMT) process. The lower end of the support part may be bonded to the ground line of the balun through the SMT process, and the support part may be stably fixed to the antenna substrate.

According to an embodiment, an antenna pad may be further provided at one end of the ground line of the balun as an SMT receptor for the antenna element. In this case, the ground line of the balun may be connected to the support part of the antenna element through the antenna pad. A signal output by the ground line coupled with the signal line may be transmitted to the support part through the antenna pad. For example, the first ground line may transmit a signal to the antenna pad or the support part through port 2 (e.g., P2 in FIG. 1). For example, if one end of the ground line is connected to the antenna pad, the antenna pad is connected to the support part, and the support part is connected to the radiator, the signal output by the ground line may be transmitted to the radiator via the antenna pad and the support part.

In the case where the antenna module according to an embodiment further includes an antenna pad, the antenna pad may transmit a balanced signal generated from the ground line to the radiator. By connecting the lower end of the support part to the antenna pad, the support part may be fixed to the antenna substrate, and a balanced signal may be fed through the support part to the radiator connected to the support part. The antenna pad may be configured to be larger than the lower end of the support part, thereby allowing the support part to be stably coupled to the antenna substrate.

The antenna pad may function as a receptor for the SMT process. The lower end of the support part may be bonded to the antenna pad through the SMT process, and the support part may be stably fixed to the antenna substrate. In the disclosure, the antenna pad may also be referred to as a pad or an island.

The SMT process refers to the process of placing electronic components on a substrate and bonding them using soldering. According to the SMT process, a solder paste, which is a soldering alloy, may be applied to the surface of a printed substrate, an electronic component (e.g., an antenna element) may be mounted on the substrate coated with solder paste, and the applied solder paste may be melted to enable electrical connection between the electronic component and the substrate. By utilizing the SMT process, the distance between electronic components may be narrowed, enabling high-density component placement, maximization of substrate space utilization, and miniaturization. Additionally, short electrical path connections may be established, thereby improving electrical characteristics. Furthermore, since there are no holes in the substrate or component leads, the substrate may be utilized densely, and high productivity and reliability may be achieved as the operation proceeds automatically.

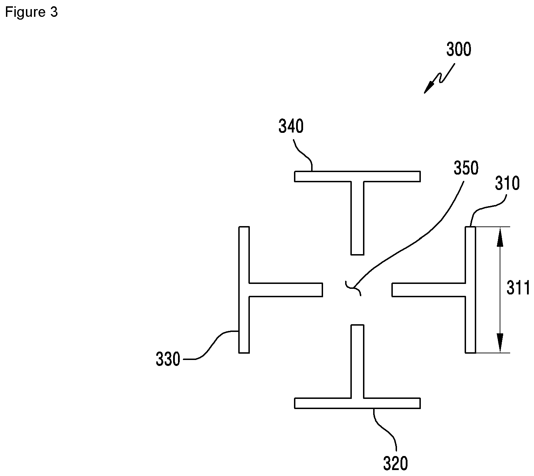

FIG. 3 illustrates a radiator 300 of a dipole antenna according to an embodiment of the disclosure.

In the disclosure, the radiator may operate as a dipole antenna when balanced signals of equal magnitude and opposite phase are applied. According to an embodiment, a slit may be formed in the radiator, and the current applied to the radiator may move along the area including the slit, thereby forming an electrical path. Referring to FIG. 3, the radiator 300 may include at least one pair of slits that are symmetrical with respect to the center 350 of the radiator. For example, the radiator may have a first slit 310 and a third slit 330 formed symmetrically to each other, and/or may include a second slit 320 and a fourth slit 340 symmetrically to each other.

When a signal is fed (applied) to the center of the radiator, current may flow toward the slit 310, 320, 330, or 340, and a linear potential distribution or polarity may occur around the slit. When an electrical path is formed along the slits or in the area including the slits, a radio frequency (RF) signal of a specified frequency band may be transmitted and/or received based on the electrical path.

In another embodiment, an electrical path may be formed based on a loop included in the radiator, instead of the slits formed in the radiator.

The antenna module of the disclosure may include a balun disposed parallel to the antenna substrate. Specifically, the antenna module may include an antenna element including a radiator, a balun disposed on the antenna substrate, and a balun-support part capable of connecting the antenna element to the substrate, feeding a signal output from the balun to the dipole antenna element, and being configured through an SMT process. The balun may feed two types of signals having equal magnitude and opposite phase to the antenna to enable the dipole antenna to operate.

The slit according to an embodiment may be configured in a T-shape and may be referred to as a folded dipole. The length of the slit may be configured to be half the wavelength (i.e., a half wavelength) corresponding to the resonant frequency of the radiator. As shown in FIG. 3, the slit may be configured in a straight shape. In order to configure the length of the slit to a half wavelength while simultaneously miniaturizing the antenna element, both ends of the slit may be formed by being bent at a predetermined angle.

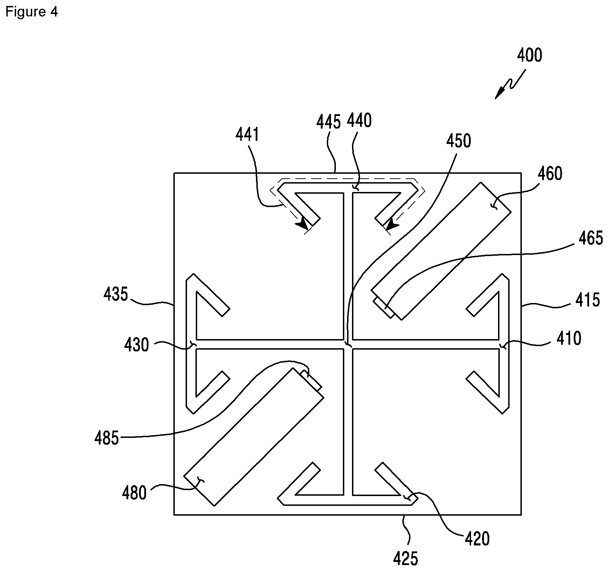

FIG. 4 illustrates a dipole antenna patch included in an antenna device according to an embodiment of the disclosure.

A radiator according to an embodiment may be made of a conductive material or a metal. Conductive materials or metals have a lower degree of loss compared to other materials. In addition, a radiator made of a metal has a lower risk of permanent deformation due to heat generation, unlike a radiator made of a plastic material. For example, the radiator may be configured as a metal plate.

According to an embodiment, the radiator may be made of a conductive material, and a slit may be formed in the radiator. When a signal is applied to the radiator, an electrical path may be formed based on the slit formed in the radiator, and the radiator may operate as a dipole antenna. Referring to FIG. 4, slits facing each other may be formed with respect to the center of the radiator. For example, a first slit 410, a second slit 420, a third slit 430, and a fourth slit 440 may be formed symmetrically with respect to the center of the radiator, and as shown in FIG. 4, a fifth slit 45 connecting the slits 410, 420, 430, 440 may be further formed.

For example, when a signal is fed to the center of the radiator, current may flow along the slits on the surface of the radiator. An electrical path may be formed in the area including the slits 410, 420, 430, 440, and an RF signal of a specified frequency band may be transmitted and/or received based on the electrical path.

Referring to FIG. 4, at least a part of the slit may be disposed adjacent to the edge of the radiator and may be parallel to the edge. For example, at least a part of the first slit 410 may be disposed adjacent to the edge 415 of the radiator and may be parallel to the edge 415. In addition, at least a part of each of the remaining slits 420, 430, or 440 may be disposed adjacent to each edge 425, 435, or 445 of the radiator and may be parallel to each edge.

According to an embodiment, the slit may be formed in a T-shape, and the length 441 of the slit may be configured to be a half wavelength of the wavelength corresponding to the resonant frequency of the radiator.

The radiator 400 according to an embodiment may include feed units 465, 485. The feed unit 465, 485 may be located at the boundary between the radiator 400 and the support part. Since the radiator 400 is connected to the support part through the feed unit 465, 485, the signal output from the balun may be fed to the radiator 400 through the feed unit 465, 485.

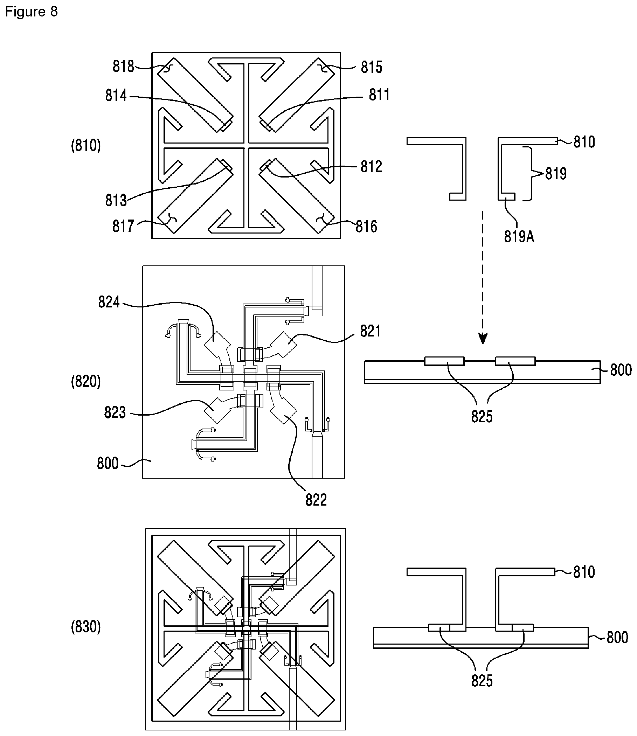

The part of the radiator 400 that extends from the feed unit 465, 485 may be referred to as a support part. For example, the support part may be formed by bending a part of the radiator 400, and in this case, cutting areas 460, 480 corresponding to the area of the support part may be formed in the radiator 400. The support part will be described in detail with reference to FIG. 8.

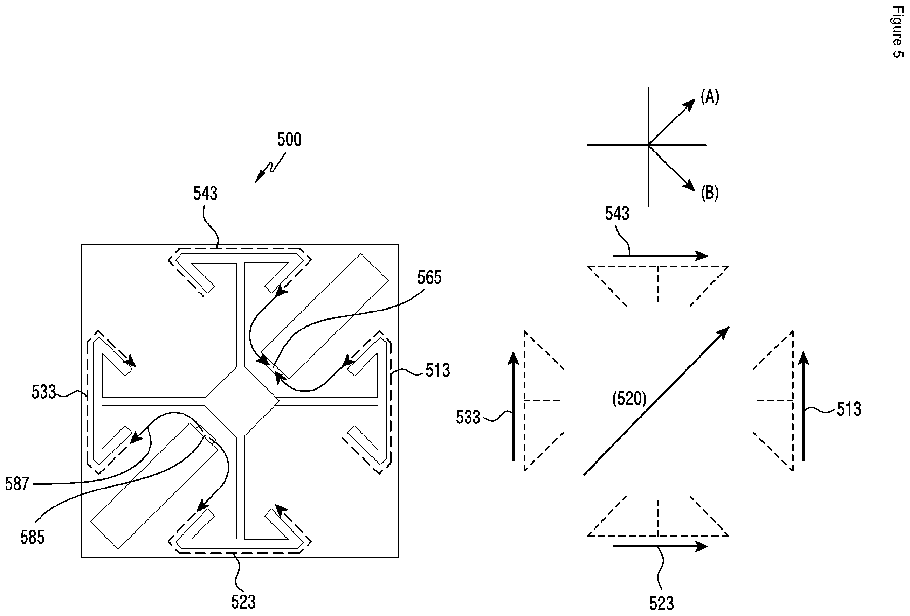

FIG. 5 illustrates a polarization component that may be created using a dipole antenna according to an embodiment of the disclosure.

Referring to FIG. 5, when a signal is applied to a feed unit 565, 585, the signal may flow along the slit, and an electrical path 513, 523, 533, 543 may be formed on the surface of the radiator 500. Based on the electrical path 513, 523, 533, 543 formed along the slit, a polarization component 520 in direction A may be generated.

The slit according to an embodiment may be formed by bending at least a part of both ends. By bending at least a part of both ends of the slit as shown in FIG. 5, a path 587 may be shortened. In a dipole antenna, the shorter the path 587 shown as a solid line, the stronger the current flowing through the electrical path becomes, and the stronger the polarization component becomes.

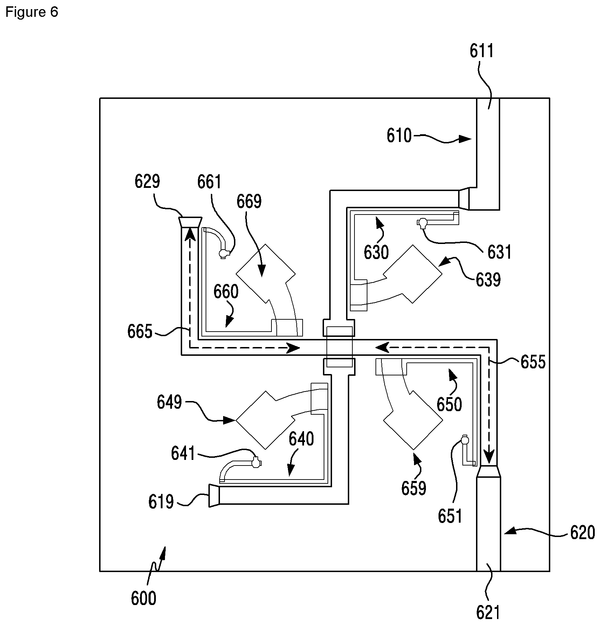

FIG. 6 illustrates a signal line and a balun disposed on an antenna substrate according to an embodiment of the disclosure.

The disclosure is not limited to an embodiment including one signal line as shown in FIG. 2, but may also be applied to an embodiment including two signal lines as shown in FIG. 6. Referring to FIG. 6, a signal line and balun structure for a dual-polarized antenna is illustrated. In the case of a dual-polarized antenna, the signal line may include a first signal line 610 for a first polarization and a second signal line 620 for a second polarization different from the first polarization. The first polarization and the second polarization may be orthogonal to each other.

When configuring a dual-polarized antenna according to an embodiment, a first signal line 610, a second signal line 620, ground lines 630, 640 coupled with the first signal line 610, and ground lines 650, 660 coupled with the second signal line 620 may be disposed on an antenna substrate 600.

The first ground lines 630, 650 of FIG. 6 may correspond to the first ground line of FIG. 2. In the description below, the ground line 630 of FIG. 6 may be referred to as a 1-1st ground line because it is the first ground line coupled with the first signal line, and the ground line 650 may be referred to as a 1-2nd ground line because it is the first ground line coupled with the second signal line. Likewise, the second ground lines 640, 660 of FIG. 6 may correspond to the second ground line of FIG. 2. The ground line 640 of FIG. 6 may be referred to as a 2-1st ground line because it is the second ground line coupled with the first signal line. The ground line 660 of FIG. 6 may be referred to as a 2-2nd ground line because it is the second ground line coupled with the second signal line.

Additionally, first antenna pads 639, 659 of FIG. 6 may correspond to the first antenna pad of FIG. 2. In the description below, the first antenna pad 639 of FIG. 6 may be referred to as a 1-1st antenna pad because it is connected to the first ground line 630 coupled with the first signal line. The first antenna pad 659 may be referred to as a 1-2nd antenna pad. Likewise, the second antenna pads 649, 669 of FIG. 6 may correspond to the second antenna pad of FIG. 2. The second antenna pad 649 of FIG. 6 may be referred to as a 2-1st antenna pad, and the second antenna pad 669 may be referred to as a 2-2nd antenna pad.

As described in FIG. 2, the length 245 of the first ground line in FIG. 6 may be the same as the length 265 of the second ground line, and the length of each ground line 230, 240, 250, 260 may be configured to λ_{g}/4. Additionally, descriptions of FIG. 6, which are redundant with those of FIG. 2, may be omitted.

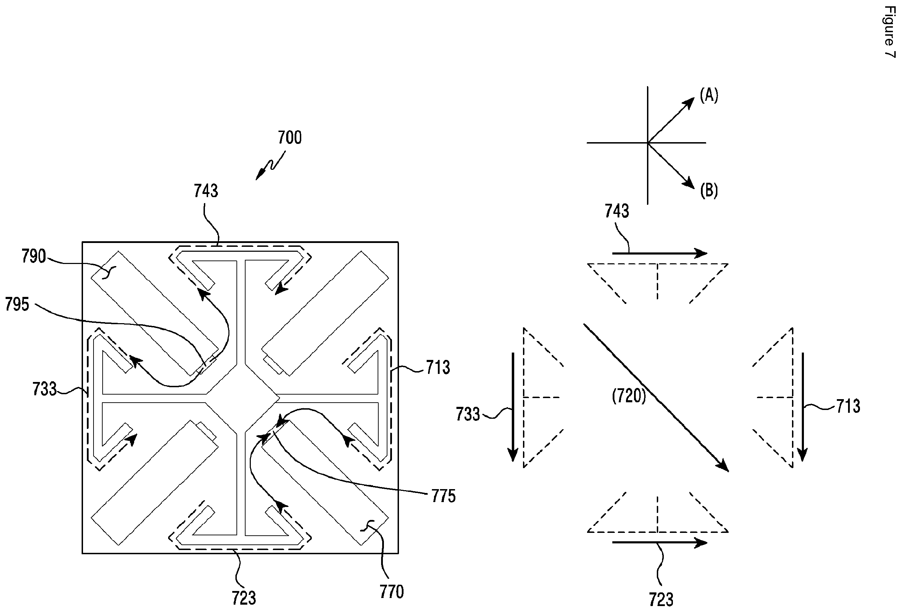

FIG. 7 illustrates a polarization component that may be created using a dipole antenna according to an embodiment of the disclosure.

The disclosure may also be applied to an embodiment of a dual-polarized antenna including two signal lines as shown in FIG. 6. Referring to FIG. 6, a signal may be applied to the first signal line 610 through P1 (611) of the first signal line, the first ground line 630 and the second battery line 640 may be coupled with the first signal line 610, and two types of RF signals having equal magnitude and opposite phase may be output through the first antenna pad 639 and the second antenna pad 649. When RF signals are output through the first antenna pad 639 and the second antenna pad 649, the signals may be fed to the radiator 500 through a feed unit (e.g., 565, 585 in FIG. 5) electrically connected to the first antenna pad 639 and the second antenna pad 649. Referring to FIG. 5, a polarization component 520 in direction A may be generated.

Referring back to FIG. 6, a signal may be applied to the second signal line 620 through P1 (621) of the second signal line, the first ground line 650 and the second ground line 660 may be coupled with the second signal line 620, and two types of RF signals having equal magnitude and opposite phase may be output through the first antenna pads 659, 669. When RF signals are output through the first antenna pad 639 and the second antenna pad 649, the signals may be fed to the radiator 700 through a feed unit (e.g., 775, 795 in FIG. 7) electrically connected to the first antenna pad 639 and the second antenna pad 649.

The radiator according to an embodiment may include four feed units as shown in FIG. 7. For example, feed units 565, 585 for first polarization and feed units 775, 795 for second polarization may be included. Referring to FIG. 7, cutting areas 770, 790 may be further formed in the radiator 700.

When a signal is applied to the feed unit 775, 795, the signal may flow along the slit, and an electrical path 713, 723, 733, 743 may be formed on the surface of the radiator 700. Based on the electrical path 713, 723, 733, 743 formed along the slit, a polarization component 720 in direction B may be generated. The direction B may be orthogonal to the direction A.

FIG. 8 illustrates an antenna according to an embodiment of the disclosure.

An antenna according to an embodiment may include a balun horizontally disposed on an antenna substrate, a support part connected to a part of the balun, and a radiator 810 connected to the upper end of the support part. Referring to FIG. 8, the balun 825 may be disposed on the antenna substrate 800, and an antenna element may be disposed on a part of the balun so that the balun and the antenna element are connected, and the antenna element may include a radiator 810 and a support part 819.

For convenience of explanation, FIG. 8 is illustrated based on a dual-polarized antenna. For example, the antenna for the dual-polarized antenna of FIG. 8 may include two signal lines, two baluns, four feed units, and four cutting areas. However, since the disclosure is not limited to the dual-polarized antenna embodiment, it may also be applied to embodiments including one signal line and one balun, or embodiments in which the radiator includes two feed units for applying two unbalanced signals.

The antenna according to an embodiment may further include an antenna pad at one end of the ground line of the balun so that the antenna element may be stably coupled to the balun. Referring to FIG. 8, antenna pads 821, 822, 823, 824 may be connected to one end of the ground lines. In this case, a signal line and a balun 825 may be disposed on an antenna substrate 800 (820), a support part 819 may be disposed on the antenna pads 821, 822, 823, 824 of the balun, and a radiator 810 may be disposed on the top of the support part 819 (830).

As previously explained, the support part 819 may be formed by bending a part of the radiator 810, and cutting areas 815, 816, 817, 818 corresponding to the area of the support part may be formed in the radiator 810.

The antenna according to an embodiment may be manufactured by connecting the support part 819 to one end of the ground line of the balun using an SMT method. In the case where an antenna pad is further included at one end of the ground line of the balun, the antenna pad 821, 822, 823, 824 may function as a receptor for the SMT process.

According to an embodiment, the balun 825 for the dipole antenna may be horizontally disposed on the antenna substrate 800 (820), and since the height of the antenna is not limited by the balun structure, the degree of freedom of design may be improved. Unlike conventional dipole antennas in which the height of the antenna is increased by using a large and complex balun support structure to support the radiator, the dipole antenna of the disclosure allows the height of the support part 819 (i.e., the height of the antenna) to vary according to a designer's intent. For example, since design elements related to the height of the support part, such as the bending position, bending length, and additional bending length, are all adjustable according to the design intent, the degree of freedom in designing the height of the antenna may be high.

The support part 819 according to an embodiment may include at least one pair of metal pillars that are symmetric with respect to the center of the radiator 810. Since the support part 819 includes at least one pair of metal pillars that are symmetric with respect to the center of the radiator 810, it may stably support the radiator. Alternatively, the bending positions or cutting areas formed in the radiator 810 may be symmetric with respect to the center of the radiator 810. The bending positions or cutting areas formed in the radiator 810 may be arranged so that the electric field formed in the antenna is symmetrical. For example, the cutting areas may be symmetrical with respect to the center of the radiator 810.

According to an embodiment, the radiator 810 and the support part 819 are made of metal materials, and the support part may be formed by bending a part of the radiator. By utilizing a part of the radiator 810 as the support part, a stacked structure may be implemented without a separate support member, and the antenna substrate-balun-support part may be easily connected using an SMT process. Additionally, since no separate components are required for the assembly of the components, manufacturing tolerances may be reduced.

Since the antenna element according to an embodiment includes a conductive support part, signals output through the balun may be received through the support part 819 connected to the balun. The radiator 810 may receive a signal from the balun through feed units 812, 814 and radiate it into the air. For example, when additional antenna pads are provided, signals output through the first antenna pad 821 and the second antenna pad 823 may be fed to the radiator 810 through the support part 819 and feed units 811, 813. Alternatively, signals output through the first antenna pad 822 and the second antenna pad 824 may be fed to the radiator 810 through the support part 819 and the feed units 812, 814.

Referring to FIG. 8, the height of the antenna may vary depending on the cutting areas 815, 816, 817, 818 and/or whether additional bending is performed. According to an embodiment, the lower end of the support part 819, which is formed by bending the radiator, may be further bent (819A). When the radiator is further bent, the surface area of the support part in contact with the antenna substrate or antenna pad may increase, or the height of the support part may decrease. Accordingly, the radiator may control bandwidth and radiation performance through further bending.

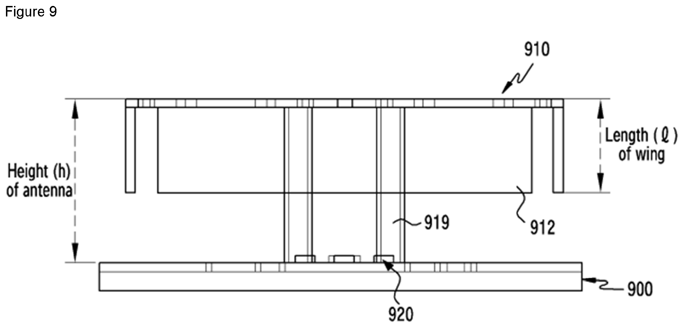

FIG. 9 illustrates the size of an antenna according to an embodiment of the disclosure.

FIG. 9 illustrates a balun 920 and an antenna element being disposed on a substrate 900. The antenna element may include a support part 919 and a radiator 910. The radiator 910 may include a wing part 912. The wing part 912 may be formed by bending the edge of the antenna to increase the surface area of the radiator 910 while reducing the size of the antenna.

Since the radiator 910 according to an embodiment is made of a metal material, it requires a greater antenna length compared to a plastic radiator of the same structure. Therefore, the radiator 910 may increase the area of the antenna radiator and/or reduce the size of the space occupied by the antenna (i.e., the size of the antenna) by bending the edges of the radiator.

The height h of the antenna according to an embodiment may be configured to be approximately 10 mm based on 3.5 GHz. Generally, as the height h of the antenna increases beyond 10 mm, antenna characteristics, such as gain, beamwidth, bandwidth, CPR, and interference with other sub-arrays, may deteriorate. Conventional dipole antennas include a large and complex balun support structure that supports the radiator, making it difficult to set the antenna height to 10 mm, and interference with other sub-arrays may occur. According to the disclosure, since the balun is configured horizontally on the substrate, such as by placing it on the substrate, the height h of the antenna and the length of the balun may be designed independently of each other. In other words, since the antenna height may be designed independently without being constrained by the balun length, antenna miniaturization and weight reduction may be realized. Furthermore, by appropriately designing the antenna height, degradation of antenna characteristics caused by interference with other sub-arrays may be prevented.

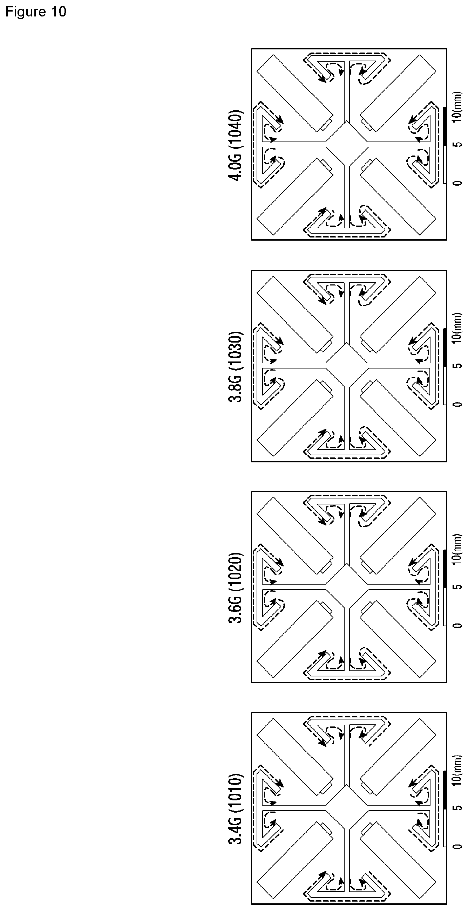

FIG. 10 illustrates an electrical path formed on the surface of a radiator when a signal is applied to the radiator according to an embodiment of the disclosure.

Referring to FIG. 10, when the frequency of the applied signal is 3.4 GHz, 3.6 GHz, 3.8 GHz, or 4.0 GHz, the surface current flowing on the surface of the radiator 1010, 1020, 1030, 1040 is similar. Accordingly, since the antenna performs similar operation at 3.4 GHz, 3.6 GHz, 3.8 GHz, or 4.0 GHz, a broadband antenna may be implemented.

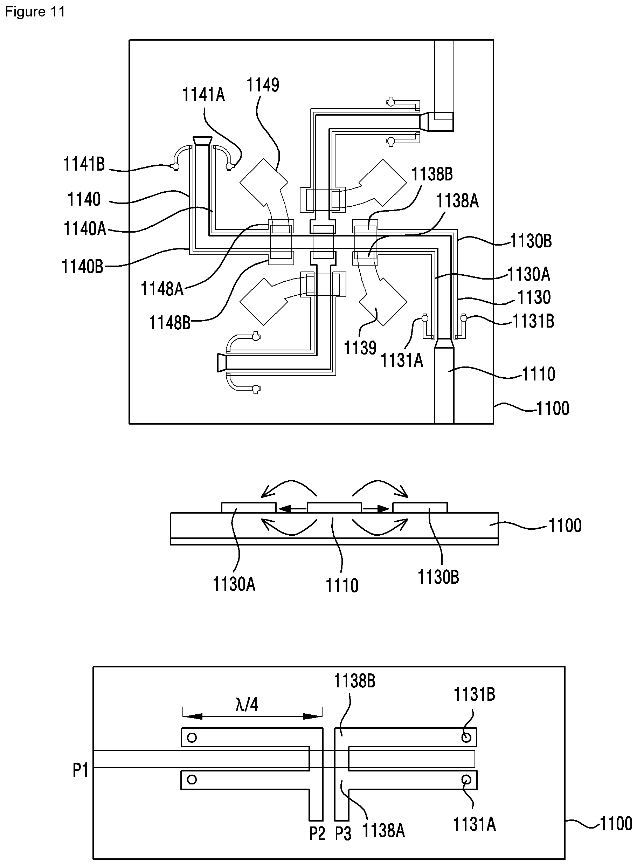

Although FIGS. 11 to 15 illustrate embodiments for a dual-polarized antenna for convenience of explanation, the disclosure is not limited to the dual-polarized antenna. Furthermore, to avoid duplication of explanation, one of the two signal lines constituting the dual-polarized antenna will be described, and the description of the other signal line will be omitted.

FIG. 11 illustrates a balun according to an embodiment of the disclosure.

According to an embodiment, ground lines may be disposed on both sides of a signal line. Specifically, a first ground line 1130 may include a first conductor 1130A and a second conductor 1130B disposed on both sides of a signal line 1110 on an antenna substrate 1100, and may further include a resistor, bridge, or via connecting the first conductor 1130A and the second conductor 1130B.

Similarly, a second ground line 1140 may include a third conductor 1140A and a fourth conductor 1140B disposed on both sides of a signal line 1110 on an antenna substrate 1100, and may further include a resistor, bridge, or via connecting the third conductor 1140A and the fourth conductor 1140B.

One end 1131A of the first conductor 1130A and one end 1131B of the second conductor 1130B of the first ground line 1130 may be grounded, and the other end 1138A of the first conductor 1130A and the other end 1138B of the second conductor 1130B may be connected to each other and/or connected to a first antenna 1139. Similarly, one end 1141A of the first conductor 1140A and one end 1141B of the second conductor 1140B of the second ground line 1140 may be grounded, and the other end 1148A of the first conductor 1140A and the other end 1148B of the second conductor 1140B may be connected to each other and/or connected to a second antenna 1149.

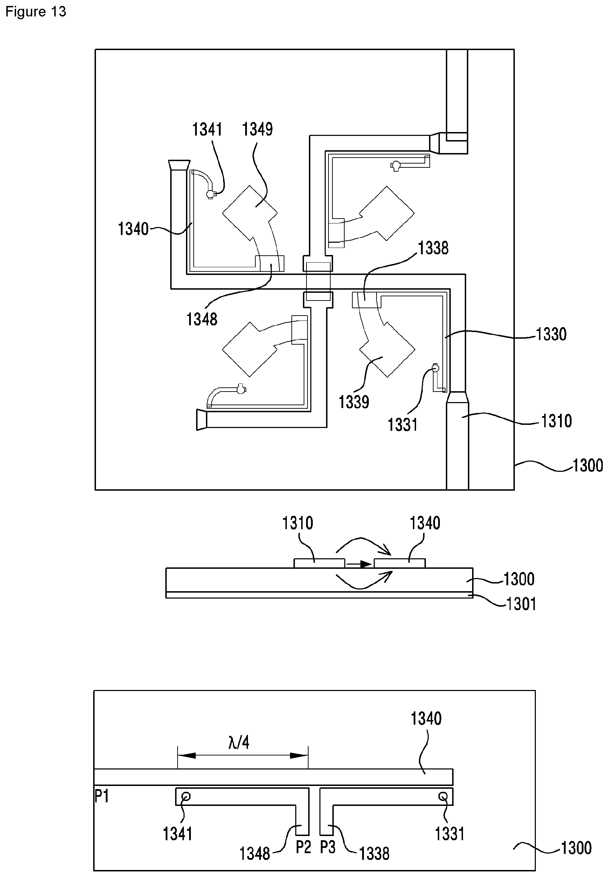

When each ground line is disposed on both sides of the signal line, stronger coupling may occur between the signal line and the ground line, and impedance matching performance may be improved. For example, stronger coupling occurs when the signal line 1110 is coupled with the first conductor 1130A having a length corresponding to 1/4 of the wavelength λ corresponding to the resonant frequency of the radiator and the second conductor 1130B having length λ/4, than when the signal line 1110 is coupled with the first conductor 1130A having length λ/4 (see the embodiment in FIG. 13 where the signal line 1310 is coupled with the ground line 1340 having length λ/4).

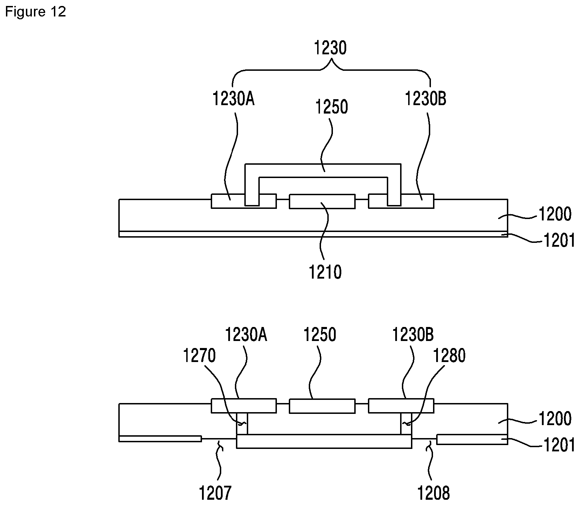

FIG. 12 illustrates a resistor, a bridge, or a slot for electrically connecting two conductors of a balun according to an embodiment of the disclosure.

Referring to FIG. 12, when baluns are disposed on both sides of a signal line along the signal line, the two conductors of the baluns may be electrically connected using a resistor, a bridge, or a slot. For example, a first ground line 1230 may be disposed on both sides of a signal line 1210, and the first ground line may include a first conductor 1230A and a second conductor 1230B. In other words, the first conductor 1230A and the second conductor 1230B may be disposed on both sides of the signal line along the signal line 1210. In order to connect the first conductor 1230A and the second conductor 1230B that are disposed to be spaced apart from each other, a 0-ohm resistor or a bridge may be used (1250), or vias 1270, 1280 may be used. When vias 1270, 1280 are used, slots 1207, 1208 may be formed in the ground 1201 of an antenna substrate 1200. The slots 1207, 1208 may be formed with a length and/or width corresponding to the length and/or width of the first conductor 1230A and the second conductor 1230B. For example, a 0-ohm resistor may be used.

FIG. 13 illustrates a balun according to an embodiment of the disclosure.

According to an embodiment, a ground line may be disposed on one side of a signal line on an antenna substrate 1300. Specifically, a first ground line 1330 may be disposed parallel to a signal line 1310 on one side of the signal line 1310. A second ground line 1340 may be disposed parallel to the signal line 1310 on one side of the signal line 1310. Since the signal line 1310 is coupled with the ground line 1340 having a length corresponding to 1/4 of the wavelength λ corresponding to the resonant frequency of the radiator, the energy conversion efficiency, etc., may be lower than that of the embodiment of FIG. 11. However, since the first balun is configured with a single conductor and the second balun is also configured with a single conductor, unlike the embodiments of FIG. 11 and FIG. 12, a structure for binding the first conductor and the third conductor or connecting the second conductor and the fourth conductor is not required, thereby simplifying the structure.

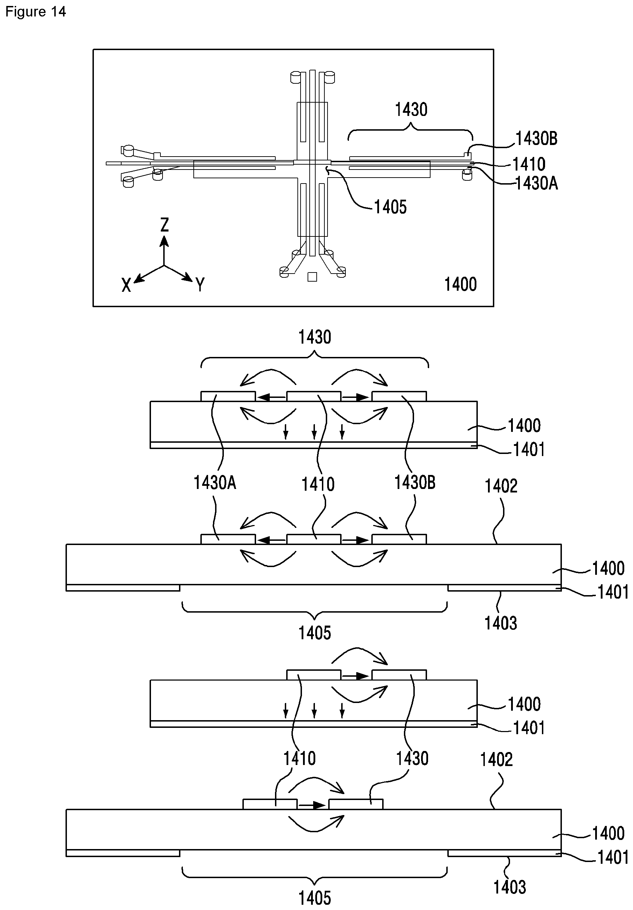

FIG. 14 illustrates a balun according to an embodiment of the disclosure.

Referring to FIG. 14, an antenna substrate 1400 may include ground 1401 on a surface 1403 of the antenna substrate other than one surface 1402 thereof where the signal line 1410 and ground line 1430 are disposed. A slot may be formed in a part 1405 of the other surface 1403 corresponding to a part 1404 of one side 1402 of the antenna substrate 1400 where the signal line 1410 and ground line 1430 are disposed side by side. For example, the ground originally present in the part 1405 of the other surface corresponding to the part 1404 of one side may be removed. Alternatively, ground 1401 may be formed on the remainder of the other surface 1403 excluding the part 1405 of the other surface 1403.

In the case where a slot is formed in the part 1405 of the other surface 1403 corresponding to the part 1404 of one surface of the antenna substrate 1400 on which the signal line 1410 and the ground line 1430 are disposed, when coupling occurs between the signal line 1410 and the ground line 1430, the energy generated from the signal line 1410 may be coupled with the ground line 1430 without leaking out to the ground 1401, thereby improving impedance matching and energy conversion efficiency.

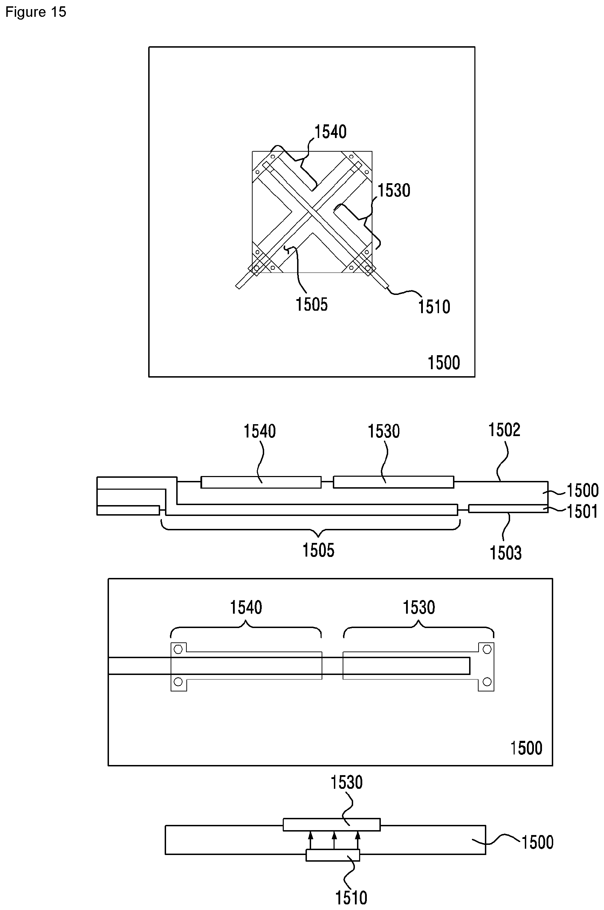

FIG. 15 illustrates a balun according to an embodiment of the disclosure.

Referring to FIG. 15, an antenna substrate 1500 may have ground 1501 formed on one surface 1503 of the antenna substrate on which a signal line 1510 and ground lines 1530, 1540 are disposed, and the first ground line 1530 and the second ground line 1540 may be disposed on the other surface 1502 other than one surface 1503. When an RF signal is applied to the signal line 1510, the signal line 1510 and the first ground line 1530 may be coupled through the antenna substrate 1500, and the signal line 1510 and the second ground line 1540 may be coupled through the antenna substrate 1500.

The signal line 1510 may be disposed on a part 1505 of one surface 1503 of the antenna substrate 1500, and the ground line 1530 may be disposed parallel to the signal line 1510 on the other surface 1502 of the antenna substrate 1500. Since there is no ground on the part 1505 of one surface 1503 of the antenna substrate 1500 where the signal line 1510 is disposed, energy generated from the signal line 1510 may be coupled with the ground line 1530 or the ground line 1540, thereby improving impedance matching and energy conversion efficiency.

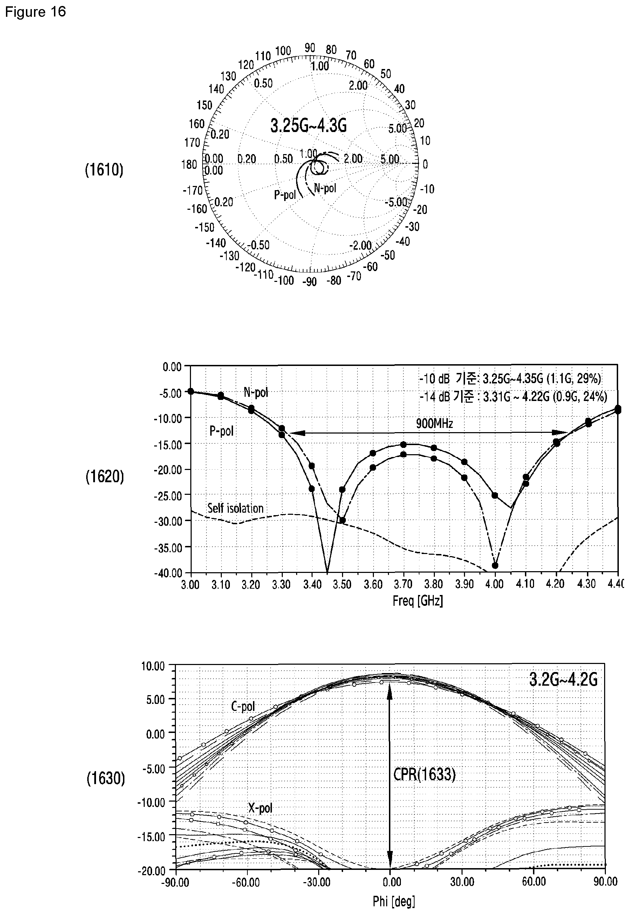

FIG. 16 illustrates an example of antenna performance according to an antenna structure according to an embodiment of the disclosure.

FIG. 16 illustrates a Smith chart 1610, a dB scale chart 1620, and an antenna radiation pattern 1630 to represent impedance matching performance, bandwidth, linearity, directivity, and CPR performance for an antenna combining a Marchand balun with a metal patch.

The Smith chart 1610 displays the impedance value of a reflected signal at frequencies from 3.25 to 4.3 GHz. The dB scale chart 1620 displays the Smith chart 1610 on a dB scale. According to the Smith chart 1610 and the dB scale chart 1620, since the impedance value of the reflected signal is at the center point of the Smith chart, the impedance at the input end matches the impedance seen at the output end. Referring to FIG. 16, the antenna may have a bandwidth performance of 900 MHz based on 14 dB.

The antenna radiation pattern 1630 represents the level difference (cross polarization ratio (CPR)) 1633 between the co-pol and the x-pol. The antenna radiation pattern 1630 is symmetrical and not skewed to the left or right, which indicates that the antenna may create a constant phase difference (i.e., 180 degrees) in a wideband. In addition, the linearity of the antenna may be determined based on the density of the antenna radiation pattern 1630. In the ideal case where there is no interference between antennas, the antenna radiation pattern 1630 appears as the same graph; therefore, the less interference there is between antennas (or the better the isolation performance), the more densely the antenna radiation pattern may be formed.

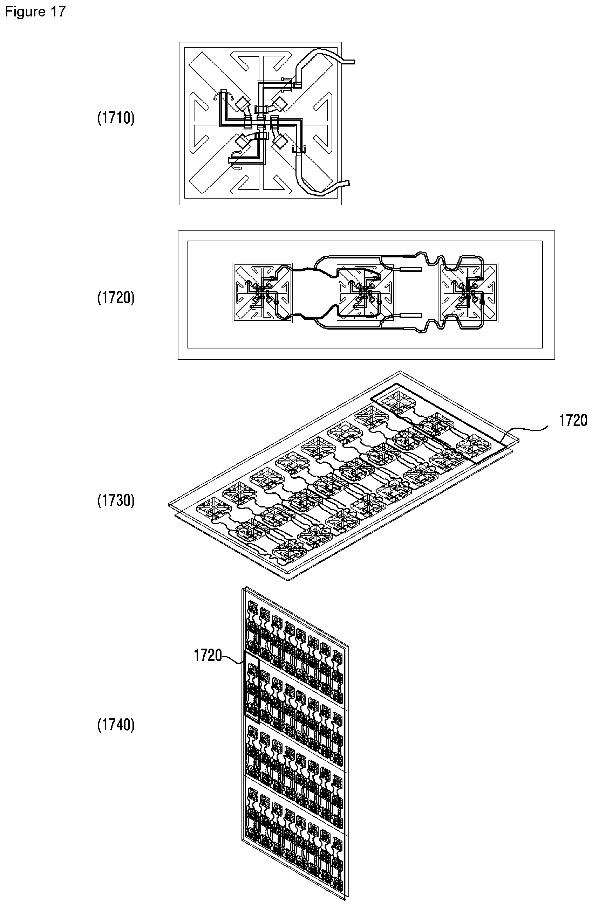

FIG. 17 illustrates an antenna according to an embodiment of the disclosure.

The antennas illustrated in FIG. 17 may be referred to as an antenna element 1710, a sub-array 1720, an antenna array 1730, and a full array 1720, respectively.

Referring to FIG. 17, a plurality of antenna elements 1710 may form a sub-array 1720 in a row, and a plurality of sub-arrays 1720 may form an antenna array 1730 and a full array 1720 in a row.

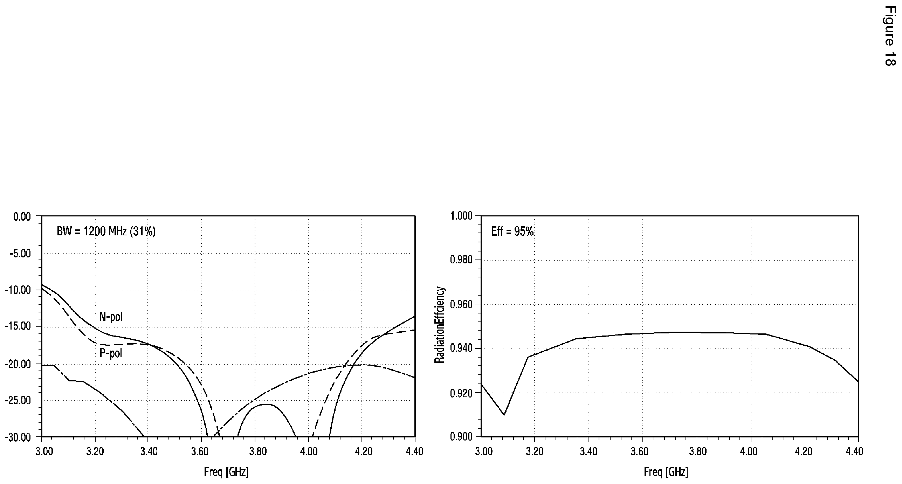

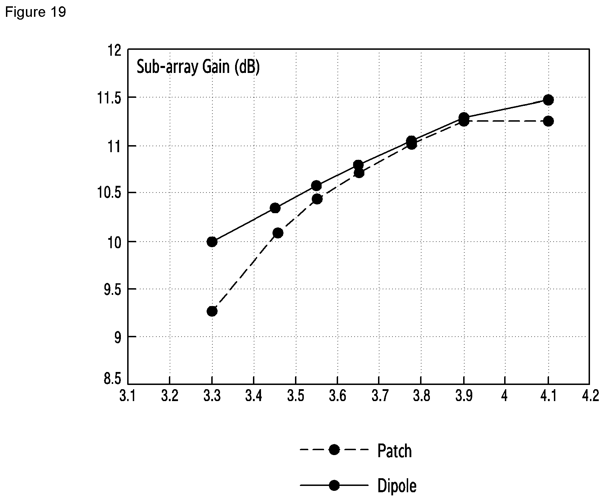

Hereafter, the performance of a sub-array configured with three antenna elements in a row will be evaluated. The antenna element used for performance evaluation includes a radiator configured as a metal plate, and a support part that connects the output port of a balun to the radiator and supports the radiator. For one antenna element, two types of signal lines for a dual-polarized antenna and a Marchand balun horizontally disposed on an antenna substrate for each signal line were used. Specifically, bandwidth performance, linearity against frequency, and isolation performance are evaluated. In FIG. 18, the performance of the sub-array was evaluated by operating the sub-array, and in FIGS. 19 to 21, the average performance of the sub-array was evaluated by operating the full array.

FIG. 18 illustrates an example of performance of a sub-array according to an embodiment of the disclosure.

FIG. 18 shows the bandwidth performance and radiation efficiency for the sub-array 1720 in FIG. 17. Referring to FIG. 18, the sub-array may have a bandwidth performance of 1200 MHz at -14 dB. The gain may be increased by configuring the sub-array by combining a plurality of antenna elements.

Referring to FIG. 16, the bandwidth performance of the antenna element is 900 MHz at -14 dB. The sub-array configured by combining antenna elements may have improved bandwidth performance compared to the antenna element.

Referring to the frequency-radiation efficiency graph on the right, the antenna element according to an embodiment may achieve an efficiency of 95%, which is higher than the efficiency (approximately in the low 90% range) of a dipole antenna implemented in plastic.

FIGS. 19 to 21 compare the performance of a dipole antenna and a patch antenna according to an embodiment. According to an embodiment, the dipole antenna and the patch antenna in FIGS. 19 to 21 may include a radiator configured as a metal plate and a support part for feeding power to the radiator. The dipole antenna may further include a Marchand balun formed horizontally on the antenna substrate and slits formed in the metal plate, and the patch antenna may further include a T-junction divider.

FIG. 19 illustrates the average gain performance of a sub-array according to an embodiment of the disclosure.

Referring to FIG. 19, the gain value of the sub-array at a single frequency (e.g., about 3.8) is about 11 dB for both the patch antenna and the dipole antenna. At frequencies lower or higher than the single frequency, the gain value of the patch antenna decreases significantly compared to the gain value of the dipole antenna.

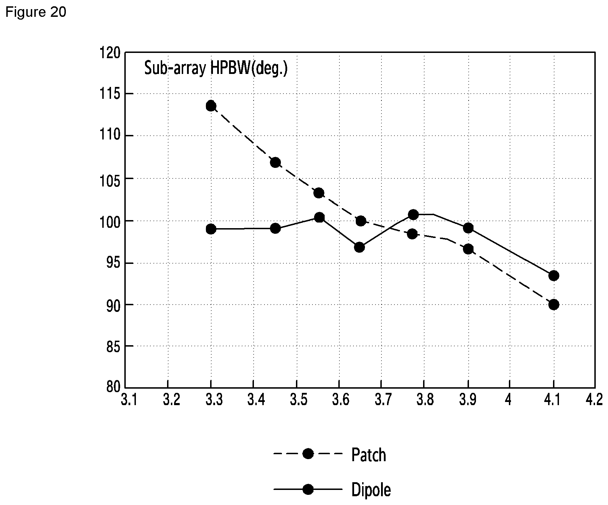

FIG. 20 illustrates an example of average half-power beam width (HPBW) performance of a sub-array according to an embodiment of the disclosure.

Referring to FIG. 20, the degree of change in beam width depending on a change in frequency is smaller in the dipole antenna than in the patch antenna. In other words, since the rate of change in beam width of the dipole antenna is small, the linearity of the dipole antenna is better.

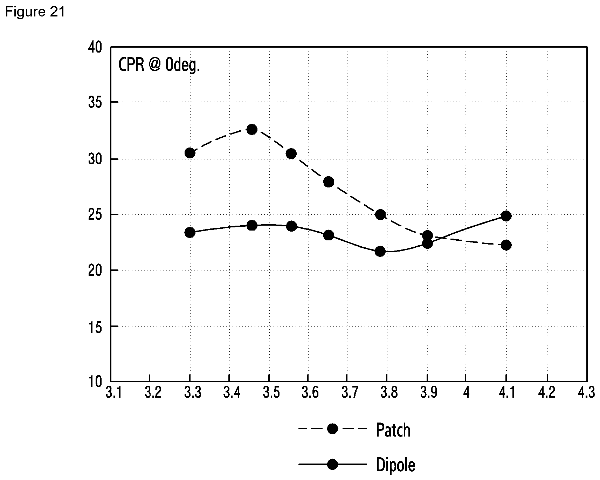

FIG. 21 illustrates an example of average CPR performance of a sub-array according to an embodiment of the disclosure.

Referring to FIG. 21, the degree of change in CPR performance depending on a change in frequency is smaller in the dipole antenna than in the patch antenna. In other words, since the rate of change in CPR performance of the dipole antenna is small, the formability of the dipole antenna is better. (Although the CPR value of the patch antenna in FIG. 21 is greater than the CPR value of the dipole antenna, the difference in CPR values is less than 1/100, which is therefore insignificant).

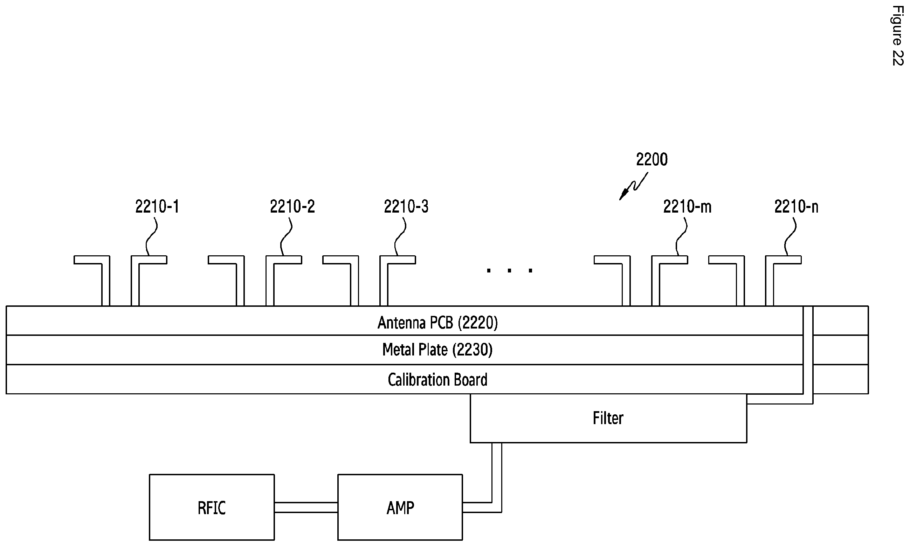

FIG. 22 illustrates an antenna module according to an embodiment of the disclosure.

Referring to FIG. 22, an antenna module 2200 may include a plurality of antenna elements 2210-1, 2210-2, 2210-3, ..., 2210-n, an antenna PCB 2220, a metal plate 2230, a calibration board, a filter, an amplifier AMP, and a radio frequency integrated circuit (RFIC).

The antenna module 2200 may include antenna elements 2210-1, 2210-2, 2210-3, ..., or 2210-n, a balun structure formed horizontally on the antenna PCB 2220, and an RFIC.

The antenna elements 2210-1, 2210-2, 2210-3, ..., or 2210-n may be electrically connected to the filter via RF signal lines. The antenna elements 2210-1, 2210-2, 2210-3, ..., or 2210-n, the signal lines, and the baluns may be mounted on the antenna PCB 2220. The antenna PCB 2220 may include a plurality of RF signal lines connecting each antenna element to the filter. The metal plate 2230 may function as the ground plane of the antenna PCB 2220.

An RF processor may include an amplifier AMP and an RFIC, and may be implemented on the antenna PCB 2220, like the antenna elements 2210-1, 2210-2, 2210-3, ..., or 2210-n.

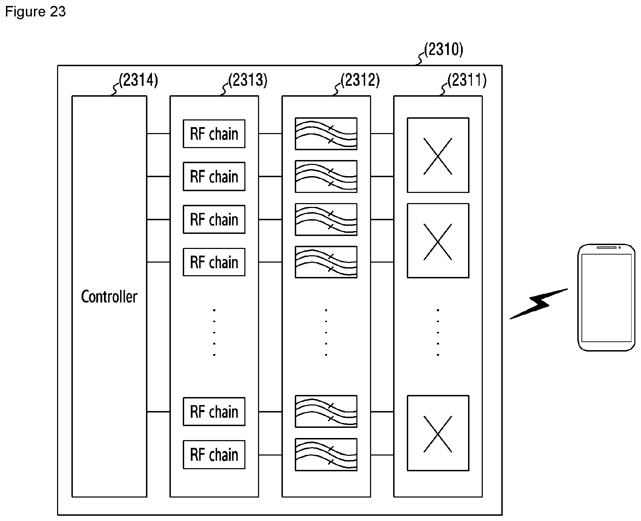

FIG. 23 illustrates the functional configuration of an electronic device according to an embodiment of the disclosure.

Referring to FIG. 23, an exemplary functional configuration of an electronic device 2310 is illustrated. The electronic device 2310 may include an antenna unit 2311, a filter unit 2312, a radio frequency (RF) processor 2313, and a controller 2314.

The antenna unit 2311 may include a plurality of antennas. The antenna performs functions for transmitting and receiving signals over a wireless channel. The antenna may include a radiator configured as a conductor or a conductive pattern formed on a substrate (e.g., a PCB). The antenna may radiate an up-converted signal over a wireless channel or obtain a signal radiated by another device. Each antenna may be referred to as a radiator or an antenna element. In some embodiments, the antenna unit 2311 may include an antenna array (e.g., a sub-array) in which a plurality of antenna elements form a row. The antenna unit 2311 may be electrically connected to the filter unit 2312 via RF signal lines. The antenna unit 2311 may be mounted on a PCB including a plurality of antenna elements. The PCB may include a plurality of RF signal lines connecting each antenna element to a filter of the filter unit 2312. These RF signal lines may be referred to as a feeding network. The antenna unit 2311 may provide a received signal to the filter unit 2312 or radiate a signal provided from the filter unit 2312 into the air. The antenna of the structure according to an embodiment of the disclosure may be included in the antenna unit 2311.

According to various embodiments, the antenna unit 2311 may include at least one antenna module having a dual-polarized antenna. The dual-polarized antenna may transmit and receive signals having different polarizations. For example, the dual-polarized antenna may transmit and receive a first signal having a polarization of +45° and a second signal having a polarization of -45°. It goes without saying that polarizations may be configured as other orthogonal polarizations in addition to +45° and -45°. Each antenna element may be connected to a feeding line or indirectly connected by a coupling, and may be electrically connected to the filter unit 2312, RF processor 2313, and controller 2314, which will be described later.

According to an embodiment, the dual-polarized antenna may be a patch antenna (or a microstrip antenna). A dual-polarized antenna may be easily implemented and integrated into an array antenna by having the form of a patch antenna. Two signals having different polarizations may be input to each antenna port. Each antenna port corresponds to an antenna element. For high efficiency, it is required to optimize the relationship between the co-pol characteristics and the cross-pol characteristics between two signals having different polarizations. In a dual-polarized antenna, the co-pol characteristics represent the characteristics for a specific polarization component, and the cross-pol characteristics represent the characteristics for a polarization component other than the specific polarization component.

Antennas (e.g., antenna element, sub array, and antenna array) of the antenna device according to an embodiment of the disclosure may be included in the antenna unit 2311. For example, a radiator or balun of a dipole metal patch antenna-horizontal balun structure according to an embodiment of the disclosure may be included in the antenna unit 2311 of FIG. 23.

The filter unit 2312 may perform filtering to transmit a signal of a desired frequency. The filter unit 2312 may perform the function of selectively identifying the frequency by forming resonance. In some embodiments, the filter unit 2312 may form resonance through a cavity that structurally includes a dielectric. Additionally, in some embodiments, the filter unit 2312 may form resonance through elements that form inductance or capacitance. Additionally, in some embodiments, the filter unit 2312 may include an elastic filter such as a bulk acoustic wave (BAW) filter or a surface acoustic wave (SAW) filter. The filter unit 2312 may include at least one of a band pass filter, a low pass filter, a high pass filter, or a band reject filter. That is, the filter unit 2312 may include RF circuits for obtaining a signal in a frequency band for transmission or a frequency band for reception. The filter unit 2312 according to various embodiments may electrically connect the antenna unit 2311 and the RF processor 2313.

The RF processor 2313 may include a plurality of RF paths. An RF path may be a unit of a path through which a signal received through the antenna or a signal radiated through the antenna passes. At least one RF path may be referred to as an RF chain. An RF chain may include a plurality of RF elements. RF elements may include amplifiers, mixers, oscillators, DACs, ADCs, etc. For example, the RF processor 2313 may include an up converter that up-converts a baseband digital transmission signal to a transmission frequency, and a digital-to-analog converter (DAC) that converts the up-converted digital transmission signal into an analog RF transmission signal. The up converter and the DAC form part of the transmission path. The transmission path may further include a power amplifier (PA) or a coupler (or combiner). Additionally, for example, the RF processor 2313 may include an analog-to-digital converter (ADC) that converts an analog RF reception signal into a digital reception signal, and a down converter that converts the digital reception signal into a baseband digital reception signal. The ADC and the down converter form part of the reception path. The receiving path may further include a low-noise amplifier (LNA) or a coupler (or divider). The RF components of the RF processor may be implemented on a PCB. The antennas and the RF components of the RF processor may be implemented on a PCB, and filters may be repeatedly connected between the PCBs to form multiple layers.

The radio frequency integrated circuit (RFIC) and package board (PKG) of an electronic device including an antenna element according to an embodiment of the disclosure may be included in the RF processor 2313 of FIG. 23. That is, the RF processor 2313 may include a radio frequency integrated circuit (RFIC) as an RF element for mmWave. As described above in the disclosure, the RFIC may be formed as an RFIC chip combined with a package board and coupled to the RU board, or the RFIC may be directly coupled by the RU board.

The controller 2314 may control the overall operation of the electronic device 2310. The controller 2314 may include various modules for performing communication. The controller 2314 may include at least one processor, such as a modem. The controller 2314 may include modules for digital signal processing. For example, the controller 2314 may include a modem. When transmitting data, the controller 2314 generates complex symbols by encoding and modulating the transmitted bit sequence. Additionally, for example, when receiving data, the controller 2314 restores the received bit sequence by demodulating and decoding the baseband signal. The controller 2314 may perform the functions of a protocol stack required by the communication standard.

FIG. 23 describes the functional configuration of the electronic device 2310 as equipment to which a device according to various embodiments of the disclosure may be applied. However, the example shown in FIG. 23 is merely an exemplary configuration of a device for a structure according to various embodiments of the disclosure described with reference to FIGS. 1 to 22, and the embodiments of the disclosure are not limited to the components of the equipment shown in FIG. 23. Therefore, the antenna element structure itself and the electronic device including the structure may also be understood as an embodiment of the disclosure.

In the specific embodiments of the disclosure described above, the components included in the disclosure are expressed in the singular or plural form according to the specific embodiments presented. However, the singular or plural expressions are selected to suit the situations presented for the convenience of explanation, and the disclosure is not limited to singular or plural components; even if a component is expressed in the plural form, it may be configured in the singular form, and even if a component is expressed in the singular form, it may be configured in the plural form.

Meanwhile, the embodiments of the disclosure disclosed in this specification and drawings are merely specific examples presented to easily explain the technical concept of the disclosure and to aid in understanding the disclosure, and are not intended to limit the scope of the disclosure. In other words, it is obvious to those skilled in the art that other variations are possible based on the technical concept of the disclosure. Furthermore, the respective embodiments may be combined and operated as needed. For example, parts of an embodiment and another embodiment in the disclosure may be combined to operate a base station and a UE. For example, parts of an embodiment and other embodiments in the disclosure may be combined to form an antenna element or an electronic device including the same.

The drawings describing the method of the disclosure may omit some components and include only some components to the extent that the subject matter of the disclosure is not impaired.

In addition, the method of the disclosure may be implemented by combining some or all of the descriptions included in each embodiment to the extent that the subject matter of the disclosure is not impaired.

Various embodiments of the disclosure have been described above. The description of the disclosure described above is for illustrative purposes only, and the embodiments of the disclosure are not limited to the disclosed embodiments. Those skilled in the art to which the disclosure pertains will understand that the disclosure may be easily modified into other specific forms without altering the technical concept or essential features of the disclosure. The scope of the disclosure is defined by the claims set forth below rather than by the detailed description, and all modifications or variations derived from the meaning and scope of the claims and the concept of equivalents thereto should be interpreted as being included within the scope of the disclosure.

An antenna module according to an embodiment of the disclosure may include: an antenna substrate; a signal line disposed on the antenna substrate; a first ground line disposed on the antenna substrate to be adjacent to at least a part of the signal line and having one end grounded; a second ground line disposed on the antenna substrate to be adjacent to at least a part of the signal line and having one end grounded; an array antenna including a plurality of antenna elements disposed on the antenna substrate; and a radio frequency integrated circuit (RFIC) configured to control a signal applied to the plurality of antenna elements, wherein the antenna element may include: a first support part connected to the first ground line and a second support part connected to the second ground line; and a radiator connected to upper ends of the first support part and the second support part.

At least one pair of slits may be formed in the radiator so as to be symmetrical with respect to the center of the radiator.

The radiator may include a metal plate.

At least a part of the dipole may be disposed adjacent to the edge of the radiator and parallel to the edge.

The first ground line may transmit a first radio frequency (RF) signal generated from the first ground line to the first support part, the second ground line may transmit a second RF signal generated from the second ground line to the second support part, and the first RF signal and the second RF signal may have opposite phases and equal magnitudes.

The antenna module may further include a first antenna pad connected to the other end of the first ground line and a second antenna pad connected to the other end of the second ground line, the first support part may be disposed on the first antenna pad to be connected to the first ground line, the second support part may be disposed on the second antenna pad to be connected to the second ground line, the first antenna pad may transmit a first radio frequency (RF) signal generated from the first ground line to the first support part, the second antenna pad may transmit a second RF signal generated from the second ground line to the second support part, and the first RF signal and the second RF signal may have opposite phases and equal magnitudes.

The first support part and the second support part may be formed by bending a part of the radiator, a first cutting area corresponding to the area of the first support part and a second cutting area corresponding to the area of the second support part may be formed in the radiator, and the first cutting area may be symmetrical to the second cutting area with respect to the center of the radiator.

The first ground line may include a first conductor and a second conductor disposed on both sides of the signal line on the antenna substrate, the second ground line may include a third conductor and a fourth conductor disposed on both sides of the signal line on the antenna substrate, the first conductor and the second conductor may be connected to each other through a resistor, a bridge, or a via, and the third conductor and the fourth conductor may be connected to each other through a resistor, a bridge, or a via.

A ground may be formed on a surface of the antenna substrate other than one surface of the antenna substrate where the signal line is disposed, and a slot corresponding to the first ground line and the second ground line may be formed in the ground.

A ground may be formed on one surface of the antenna substrate where the signal line is disposed, the first ground line and the second ground line may be disposed on a surface other than the one surface, the signal line and the first ground line may be coupled through the antenna substrate, and the signal line and the second ground line may be coupled through the antenna substrate.

The signal line may include a first signal line for a first polarization and a second signal line for a second polarization different from the first polarization, the first ground line may include a 1-1st ground line disposed adjacent to the first signal line and a 1-2nd ground line disposed adjacent to the second signal line, the second ground line may include a 2-1st ground line disposed adjacent to the first signal line and a 2-2nd ground line disposed adjacent to the second signal line, the first antenna pad may include a 1-1st antenna pad connected to the 1-1st ground line and a 1-2nd antenna pad connected to the 1-2nd ground line, the second antenna pad may include a 2-1st antenna pad connected to the 2-1st ground line and a 2-2nd antenna pad connected to the 2-2nd ground line, the first support part may include a 1-1st support part disposed on the 1-1st antenna pad and a 1-2nd support part disposed on the 1-2nd antenna pad, and the second support part may include a 2-1st support part disposed on the 2-1st antenna pad and a 2-2nd support part disposed on the 2-2nd antenna pad.

The first ground line, when coupled with the signal line, may feed a first radio frequency (RF) signal to the radiator through the first support part, the second ground line, when coupled with the signal line, may feed a second RF signal to the radiator through the second support part, the first RF signal and the second RF signal may have opposite phases and equal magnitudes, an electrical path may be formed in the radiator based on the first RF signal and the second RF signal, and an RF signal of a specified frequency band may be transmitted and/or received based on the electrical path.

A base station according to an embodiment of the disclosure may include: an antenna unit including an antenna module; and a controller, wherein the antenna module may include: an antenna substrate; a signal line disposed on the antenna substrate; a first ground line disposed on the antenna substrate to be adjacent to at least a part of the signal line and having one end grounded; a second ground line disposed on the antenna substrate to be adjacent to at least a part of the signal line and having one end grounded; an array antenna including a plurality of antenna elements disposed on the antenna substrate; and a radio frequency integrated circuit (RFIC) configured to control a signal applied to the plurality of antenna elements, and wherein the antenna element may include: a first support part connected to the first ground line and a second support part connected to the second ground line; and a radiator connected to upper ends of the first support part and the second support part.

At least one pair of slits may be formed in the radiator so as to be symmetrical with respect to the center of the radiator.

The radiator may include a metal plate.

At least a part of the slit may be disposed adjacent to the edge of the radiator and parallel to the edge.

A first radio frequency (RF) signal generated from the first ground line may be transmitted to the first support part, a second RF signal generated from the second ground line may be transmitted to the second support part, and the first RF signal and the second RF signal may have opposite phases and equal magnitudes.

The antenna module may further include a first antenna pad connected to the other end of the first ground line and a second antenna pad connected to the other end of the second ground line, the first support part may be disposed on the first antenna pad to be connected to the first ground line, the second support part may be disposed on the second antenna pad to be connected to the second ground line, the first antenna pad may transmit a first radio frequency (RF) signal generated from the first ground line to the first support part, the second antenna pad may transmit a second RF signal generated from the second ground line to the second support part, and the first RF signal and the second RF signal may have opposite phases and equal magnitudes.

The first support part and the second support part may be formed by bending a part of the radiator, a first cutting area corresponding to the area of the first support part and a second cutting area corresponding to the area of the second support part may be formed in the radiator, and the first cutting area may be symmetrical to the second cutting area with respect to the center of the radiator.

The first ground line may include a first conductor and a second conductor disposed on both sides of the signal line on the antenna substrate, the second ground line may include a third conductor and a fourth conductor disposed on both sides of the signal line on the antenna substrate, the first conductor and the second conductor may be connected to each other through a resistor, a bridge, or a via, and the third conductor and the fourth conductor may be connected to each other through a resistor, a bridge, or a via.

A ground may be formed on a surface of the antenna substrate other than one surface of the antenna substrate where the signal line is disposed, and a slot corresponding to the first ground line and the second ground line may be formed in the ground.

A ground may be formed on one surface of the antenna substrate where the signal line is disposed, the first ground line and the second ground line may be disposed on a surface other than the one surface, the signal line and the first ground line may be coupled through the antenna substrate, and the signal line and the second ground line may be coupled through the antenna substrate.

The signal line may include a first signal line for a first polarization and a second signal line for a second polarization different from the first polarization, the first ground line may include a 1-1st ground line disposed adjacent to the first signal line and a 1-2nd ground line disposed adjacent to the second signal line, the second ground line may include a 2-1st ground line disposed adjacent to the first signal line and a 2-2nd ground line disposed adjacent to the second signal line, the first support part may include a 1-1st support part connected to the 1-1st ground line and a 1-2nd support part connected to the 1-2nd ground line, and the second support part may include a 2-1st support part connected to the 2-1st ground line and a 2-2nd support part connected to the 2-2nd ground line.

The first ground line, when coupled with the signal line, may feed a first radio frequency (RF) signal to the radiator through the first support part, the second ground line, when coupled with the signal line, may feed a second RF signal to the radiator through the second support part, the first RF signal and the second RF signal may have opposite phases and equal magnitudes, an electrical path may be formed in the radiator based on the first RF signal and the second RF signal, and an RF signal of a specified frequency band may be transmitted and/or received based on the electrical path.

An antenna module according to an embodiment of the disclosure may include: an antenna substrate; a signal line disposed on the antenna substrate; a balun disposed on the antenna substrate to be adjacent to at least a part of the signal line; an array antenna including a plurality of antenna elements disposed on the antenna substrate; and a radio frequency integrated circuit (RFIC) configured to control a signal applied to the plurality of antenna elements, wherein the antenna element may include: a first support part and a second support part connected to the balun; and a radiator connected to upper ends of the first support part and the second support part.

At least one pair of slits may be formed in the radiator so as to be symmetrical with respect to the center of the radiator.

The radiator may include a metal plate.

At least a part of the slit may be disposed adjacent to the edge of the radiator and parallel to the edge.

The balun may include a first ground line for a first radio frequency (RF) signal and a second ground line for a second RF signal, the first RF signal and the second RF signal may have opposite phases and equal magnitudes, the first ground line may transmit the first RF signal to the first support part, the second ground line may transmit the second RF signal to the second support part, and the first RF signal and the second RF signal may have opposite phases and equal magnitudes.

The antenna module may further include a first antenna pad and a second antenna pad connected to the balun, the first support part may be connected to the balun through the first antenna pad, the second support part may be connected to the balun through the second antenna pad, the first antenna pad may transmit a first radio frequency (RF) signal generated from the balun to the first support part, the second antenna pad may transmit a second RF signal generated from the balun to the second support part, and the first RF signal and the second RF signal may have opposite phases and equal magnitudes.

The first support part and the second support part may be formed by bending a part of the radiator, a first cutting area corresponding to the area of the first support part and a second cutting area corresponding to the area of the second support part may be formed in the radiator, and the first cutting area may be symmetrical to the second cutting area with respect to the center of the radiator.

The balun may include a first ground line for a first radio frequency (RF) signal and a second ground line for a second RF signal, the first RF signal and the second RF signal may have opposite phases and equal magnitudes, the first ground line may include a first conductor and a second conductor disposed on both sides of the signal line on the antenna substrate, the second ground line may include a third conductor and a fourth conductor disposed on both sides of the signal line on the antenna substrate, the first conductor and the second conductor may be connected to each other through a resistor, a bridge, or a via, and the third conductor and the fourth conductor may be connected to each other through a resistor, a bridge, or a via.

A ground may be formed on a surface of the antenna substrate other than one surface of the antenna substrate where the signal line is disposed, and a slot corresponding to the balun may be formed in the ground.

A ground may be formed on one surface of the antenna substrate where the signal line is disposed, the balun may be disposed on a surface other than the one surface, and the signal line and the balun may be coupled through the antenna substrate.

The signal line may include a first signal line for a first polarization and a second signal line for a second polarization different from the first polarization, the balun may include a first balun disposed adjacent to the first signal line and a second balun disposed adjacent to the second signal line, the first support part may include a 1-1st support part connected to the first balun and a 1-2nd support part connected to the second balun, and the second support part may include a 2-1st support part connected to the first balun and a 2-2nd support part connected to the second balun.

The first balun, when coupled with the signal line, may feed a first radio frequency (RF) signal to the radiator through the first support part, the second balun, when coupled with the signal line, may feed a second RF signal to the radiator through the second support part, the first RF signal and the second RF signal may have opposite phases and equal magnitudes, an electrical path may be formed in the radiator based on the first RF signal and the second RF signal, and an RF signal of a specified frequency band may be transmitted and/or received based on the electrical path.

## Claims

1. An antenna module comprising:
an antenna substrate (200);
a signal line (210, 610, 620, 1110, 1210, 1310, 1410, 1510) disposed on the antenna substrate;
a first ground line (230, 630, 650, 1130, 1330, 1530) disposed on the antenna substrate to be adjacent to at least a part of the signal line and having one end grounded;
a second ground line (240, 640, 660, 1140, 1340, 1540) disposed on the antenna substrate to be adjacent to at least a part of the signal line and having one end grounded;
an array antenna comprising a plurality of antenna elements disposed on the antenna substrate; and
a radio frequency integrated circuit (RFIC) configured to control a signal applied to the plurality of antenna elements,
wherein the antenna element comprises:
a first support part connected to the first ground line and a second support part connected to the second ground line; and
a radiator (400, 500, 700, 810, 910, 1010, 1020, 1030, 1040) connected to upper ends of the first support part and the second support part.

2. A base station comprising:
an antenna unit comprising an antenna module; and
a controller,
wherein the antenna module comprises:
an antenna substrate (200);
a signal line (210, 610, 620, 1110, 1210, 1310, 1410, 1510) disposed on the antenna substrate;
a first ground line (230, 630, 650, 1130, 1330, 1530) disposed on the antenna substrate to be adjacent to at least a part of the signal line and having one end grounded;
a second ground line (240, 640, 660, 1140, 1340, 1540) disposed on the antenna substrate to be adjacent to at least a part of the signal line and having one end grounded;
an array antenna comprising a plurality of antenna elements disposed on the antenna substrate; and
a radio frequency integrated circuit (RFIC) configured to control a signal applied to the plurality of antenna elements, and
wherein the antenna element comprises:
a first support part connected to the first ground line and a second support part connected to the second ground line; and
a radiator (400, 500, 700, 810, 910, 1010, 1020, 1030, 1040) connected to upper ends of the first support part and the second support part.

3. The base station of claim 2,
wherein at least one pair of slits is formed in the radiator so as to be symmetrical with respect to a center of the radiator, and
wherein the radiator comprises a metal plate, and at least a part of the slit is disposed adjacent to an edge of the radiator and parallel to the edge.

4. The base station of claim 2,
wherein a first radio frequency (RF) signal generated from the first ground line is transmitted to the first support part,
wherein a second RF signal generated from the second ground line is transmitted to the second support part, and
wherein the first RF signal and the second RF signal have opposite phases and equal magnitudes.

5. The base station of claim 2,
wherein the antenna module further comprises a first antenna pad connected to the other end of the first ground line and a second antenna pad connected to the other end of the second ground line,
wherein the first support part is disposed on the first antenna pad to be connected to the first ground line,
wherein the second support part is disposed on the second antenna pad to be connected to the second ground line,
wherein the first antenna pad transmits a first radio frequency (RF) signal generated from the first ground line to the first support part,
wherein the second antenna pad transmits a second RF signal generated from the second ground line to the second support part, and
wherein the first RF signal and the second RF signal have opposite phases and equal magnitudes.

6. The base station of claim 2,
wherein the first support part and the second support part are formed by bending a part of the radiator,
wherein a first cutting area corresponding to the area of the first support part and a second cutting area corresponding to the area of the second support part are formed in the radiator, and
wherein the first cutting area is symmetrical to the second cutting area with respect to a center of the radiator.

7. The base station of claim 2,
wherein the first ground line (1130) comprises a first conductor (1130A) and a second conductor (1130B) disposed on both sides of the signal line on the antenna substrate,
wherein the second ground line (1140) comprises a third conductor (1140A) and a fourth conductor (1140B) disposed on both sides of the signal line on the antenna substrate,
wherein the first conductor and the second conductor are connected to each other through a resistor, a bridge, or a via, and
wherein the third conductor and the fourth conductor are connected to each other through a resistor, a bridge, or a via.

8. The base station of claim 2,
wherein a ground is formed on a surface of the antenna substrate other than one surface of the antenna substrate where the signal line is disposed, and
wherein a slot corresponding to the first ground line and the second ground line is formed in the ground.

9. The base station of claim 2,
wherein a ground is formed on one surface of the antenna substrate where the signal line is disposed,
wherein the first ground line and the second ground line are disposed on a surface other than the one surface,
wherein the signal line and the first ground line are coupled through the antenna substrate, and
wherein the signal line and the second ground line are coupled through the antenna substrate.

10. The base station of claim 2,
wherein the signal line comprises a first signal line (210, 610, 1110, 1210, 1310, 1410, 1510) for a first polarization and a second signal line (620) for a second polarization different from the first polarization,
wherein the first ground line comprises a 1-1st ground line (230, 630, 1130, 1330, 1530) disposed adjacent to the first signal line and a 1-2nd ground line (650) disposed adjacent to the second signal line,
wherein the second ground line comprises a 2-1st ground line (240, 640, 1140, 1340, 1540) disposed adjacent to the first signal line and a 2-2nd ground line (660) disposed adjacent to the second signal line,
wherein the first support part comprises a 1-1st support part connected to the 1-1st ground line and a 1-2nd support part connected to the 1-2nd ground line, and
wherein the second support part comprises a 2-1st support part connected to the 2-1st ground line and a 2-2nd support part connected to the 2-2nd ground line.

11. The base station of claim 2,
wherein the first ground line, when coupled with the signal line, feeds a first radio frequency (RF) signal to the radiator through the first support part,
wherein the second ground line, when coupled with the signal line, feeds a second RF signal to the radiator through the second support part,
wherein the first RF signal and the second RF signal have opposite phases and equal magnitudes,
wherein an electrical path is formed in the radiator based on the first RF signal and the second RF signal, and
wherein an RF signal of a specified frequency band is transmitted and/or received based on the electrical path.

12. An antenna module comprising:
an antenna substrate (200);
a signal line (210, 610, 620, 1110, 1210, 1310, 1410, 1510) disposed on the antenna substrate;
a balun (230, 240, 630, 640, 650, 660, 1130, 1140, 1330, 1340, 1530, 1540) disposed on the antenna substrate to be adjacent to at least a part of the signal line;
an array antenna comprising a plurality of antenna elements disposed on the antenna substrate; and
a radio frequency integrated circuit (RFIC) configured to control a signal applied to the plurality of antenna elements,
wherein the antenna element comprises:
a first support part and the second support part connected to the balun; and
a radiator (400, 500, 700, 810, 910, 1010, 1020, 1030, 1040) connected to upper ends of the first support part and the second support part.

13. The antenna module of claim 12,
wherein the balun comprises a first ground line (230, 630, 650, 1130, 1330, 1530) for a first radio frequency (RF) signal and a second ground line (240, 640, 660, 1140, 1340, 1540) for a second RF signal,
wherein the first RF signal and the second RF signal have opposite phases and equal magnitudes,
wherein the first ground line transmits the first RF signal to the first support part,
wherein the second ground line transmits the second RF signal to the second support part, and
wherein the first RF signal and the second RF signal have opposite phases and equal magnitudes.

14. The antenna module of claim 12,
wherein the first support part and the second support part are formed by bending a part of the radiator,
wherein a first cutting area corresponding to the area of the first support part and a second cutting area corresponding to the area of the second support part are formed in the radiator, and
wherein the first cutting area is symmetrical to the second cutting area with respect to a center of the radiator.

15. The antenna module of claim 12,
wherein the balun comprises a first ground line for a first radio frequency (RF) signal and a second ground line for a second RF signal,
wherein the first RF signal and the second RF signal have opposite phases and equal magnitudes,
wherein the first ground line comprises a first conductor and a second conductor disposed on both sides of the signal line on the antenna substrate,
wherein the second ground line comprises a third conductor and a fourth conductor disposed on both sides of the signal line on the antenna substrate,
wherein the first conductor and the second conductor are connected to each other through a resistor, a bridge, or a via, and
wherein the third conductor and the fourth conductor are connected to each other through a resistor, a bridge, or a via.
